# EUROPÄISCHE PATENTSCHRIFT

(11) **EP 2 660 019 B1**
(45) Veröffentlichungstag und Bekanntmachung des Hinweises auf die Patenterteilung: **04.11.2015**
(21) Anmeldenummer: 12166119.3
(22) Anmeldetag: 30.04.2012
(51) Int. Cl.: B26D 5/00, B65G 43/00, G06F 3/01, G05B 19/409, B26D 7/27, B26D 9/00, B26D 1/08

(54) **Anlage zum Verarbeiten von gestapeltem, blattförmigem Gut unter Verwendung einer Schneidmaschine**
Assembly for processing stacked, sheet-shaped goods using a cutting machine
Installation de traitement de produits empilés en forme de feuilles en utilisant une machine à découper

(43) Veröffentlichungstag der Anmeldung: 06.11.2013
(73) Patentinhaber: Adolf Mohr Maschinenfabrik GmbH & Co. KG, 65719 Hofheim am Taunus (DE)
(72) Erfinder: Gottschalk, Gerd, 65779 Kelkheim/Fischbach (DE)
(74) Vertreter: Quermann, Helmut

(56) Entgegenhaltungen:
- EP-A2- 0 972 618
- EP-A2- 1 000 715

## Beschreibung

Die Erfindung betrifft eine Anlage zum Verarbeiten von gestapeltem, blattförmigem Gut, mit einer Schneidmaschine zum Schneiden des Guts und mindestens einem Peripheriegerät im Verarbeitungsfluss der Schneidmaschine, wobei die Schneidmaschine auf einer Bedienerseite ein Display und ein Bedienfeld aufweist.

Derartige Anlagen sind aus dem Stand der Technik bekannt. Bei diesen stellt die Schneidmaschine, die in aller Regel als Planschneidmaschine ausgebildet ist, das zentrale Element dar, da das gestapelte, blattförmige Gut in aller Regel gemäß einer Vielzahl von Schnitten in sogenannte Nutzenstapel zu schneiden ist.

Eine solche Anlage besitzt neben der genannten Schneidmaschine in aller Regel diverse Peripheriegeräte. Es handelt sich beispielsweise im Verarbeitungsfluss vor der Schneidmaschine um einen Stapellift, mittels dessen ein Gesamtstapel sukzessive angehoben werden kann, um Teilstapel mittels einer ein anschließendes Peripheriegerät bildenden Stapelvorrichtung vom Gesamtstapel zu übernehmen. Nach dem Abtrennen des Teilstapels wird dieser einer Fördervorrichtung zugeführt, die ein weiteres Peripheriegerät darstellt. Die Fördervorrichtung fördert den Teilstapel zur Schneidmaschine, insbesondere in den Bereich des Hintertisches der Schneidmaschine. Dort wird der Teilstapel mittels einer Vorschubeinrichtung der Schneidmaschine, wobei die Vorschubeinrichtung insbesondere als Vorschubsattel ausgebildet ist, unter das Schneidmesser der Planschneidmaschine geschoben und dort von dem Schnitt mittels des Schneidmessers durch einen absenkbaren Pressbalken geklemmt. Je nach den Erfordernissen wird der Teilstapel mehrfach längs und nach dem Drehen quer geschnitten, so dass die Nutzenstapel gebildet werden. Hierbei erfolgt das Drehen des Teilstapels manuell oder maschinell.

Im Verarbeitungsfluss nach der Schneidmaschine ist beispielsweise ein Peripheriegerät in Art einer Förderrichtung zum Abfördern der Nutzenstapel vorgesehen, gegebenenfalls ein Peripheriegerät in Art einer Rückstapelvorrichtung, so dass mehrere Nutzenstapel hintereinander und nebeneinander auf einer Unterlage abgelegt werden. Die Nutzenstapel können ferner einem weiteren Peripheriegerät, das als Banderoliervorrichtung ausgebildet ist, zugeführt werden, so dass dort der jeweilige Nutzenstapel mit einer Banderole versehen ist. Alternativ bzw. zuvor kann der Nutzenstapel einer Stanzvorrichtung zugeführt werden, der ein weiteres Peripheriegerät darstellt, um so einen vorher quaderförmigen Nutzenstapel in einen von dieser Quaderform abweichenden Nutzenstapel zu überführen.

Die beschriebenen Peripheriegeräte sind, je nach mit diesem zu vollführenden Verarbeitungsschritt, näher zur oder weiter entfernt von der Schneidmaschine angeordnet. Die Peripheriegeräte stehen unter dem Aspekt des Verarbeitungsflusses des gestapelten, blattförmigen Gutes in einer Beziehung zueinander, d. h. es sind Arbeitsschritte der Peripheriegeräte und der Schneidmaschine aufeinander abzustimmen. Unter diesem Aspekt hat der Bediener der Schneidmaschine sich entweder um diese und einzelne bzw. alle Peripheriegeräte zu kümmern oder es ist weiteres Bedienpersonal vorhanden, so dass ein Bediener sich um den Arbeitsfluss der Schneidmaschine kümmert und andere Bediener um die Peripheriegeräte. Demzufolge ist bei nur einem Bediener kein optimaler Verarbeitungsfluss zu gewährleisten bzw. es müssen sich bei Betreiben der Anlage mittels mehrerer Bediener diese abstimmen. Überdies ist der Einsatz mehrerer Bediener kostenintensiv.

Eine Schneidmaschine zum Schneiden von gestapeltem, blattförmigem Gut, die als Planschneidmaschine ausgebildet ist und auf der Bedienerseite ein Display und Bedienfeld aufweist, ist aus der EP 1 000 715 A2 bekannt. Mittels Tasten des Bedienfeldes lassen sich Eingaben bei der Schneidmaschine bewerkstelligen, die für den Betrieb der Schneidmaschine unter dem Aspekt der unterschiedlichen Schnittfolgen für das gestapelte, blattförmige Gut von Bedeutung sind.

Bei dieser Planschneidmaschine nimmt ein hinteres Tischteil das zu schneidende Gut und ein vorderes Tischteil das geschnittene Gut auf. Im Bereich des hinteren Tischteils ist eine Vorschubeinrichtung für das Gut angeordnet, ferner ein Seitenanschlag für das Gut. Oberhalb des Tisches ist ein Portalrahmen angeordnet, der ein Messer zum Schneiden des Gutes, einen auf das zu schneidende Gut absenkbaren Pressbalken und auf der dem vorderen Tischteil zugewandten Seite ein Bedienfeld und ein Display aufweist. Im hinteren Bereich des hinteren Tischteils ist mindestens eine Kamera zur Überwachung der Anlage des Schneidguts im Bereich der Vorschubeinrichtung und/oder des Seitenanschlags vorgesehen, wobei ein Life-Bild der Kamera im Anzeigefeld einblendbar ist. Hierdurch kann der Bediener unmittelbar die Situation des Schneidguts im Bereich des hinteren Tisches sowie eine eventuell erforderliche bei der Ausrichtung des zu schneidenden Guts an der Vorschubeinrichtung und/oder dem Seitenanschlag überwachen.

Aufgabe der Erfindung ist es, eine Anlage der eingangs genannten Art so weiterzubilden, dass mit dieser ein besonders prozesssicheres und kostengünstiges Arbeiten möglich ist.

Gelöst wird die Aufgabe bei der Anlage der eingangs genannten Art dadurch, dass das mindestens eine Peripheriegerät einen mittels Kamera überwachten Funktionsbereich aufweist, wobei der Funktionsbereich mittels Echtzeitbild auf dem Display der Schneidmaschine darstellbar ist, sowie das mindestens eine Peripheriegerät über das Bedienfeld ansteuerbar ist.

Die erfindungsgemäße Anlage weist insbesondere im Verarbeitungsfluss vor und/oder nach der Schneidmaschine mehrere Peripheriegeräte auf, wobei Peripheriegeräte mittels Kameras überwachte Funktionsbereiche aufweisen, wobei der jeweilige Funktionsbereich mittels Echtzeitbild auf dem Display der Schneidmaschine darstellbar ist, sowie die Peripheriegeräte über das Bedienfeld ansteuerbar sind.

Dem Bediener kommt somit nicht nur die Funktion zu, die Schneidmaschine zu bedienen, sondern er erhält über die jeweilige Kamera eine aufgrund der Übermittlung des Echtzeitbildes aktuelle Information über den Zustand des jeweiligen Peripheriegerätes unter dem Aspekt des Verarbeitungsflusses der Anlage. Der Bediener kann betreffend dieses Peripheriegerät unmittelbar erkennen, ob es arbeitet, bzw., sofern es arbeitet, ob dieses Peripheriegerät exakt arbeitet. Ist dies nicht der Fall, kann der Bediener unmittelbar in den Arbeitsfluss dieses Peripheriegeräts eingreifen. Hierbei steuert er über das Bedienfeld der Schneidmaschine unmittelbar dieses Peripheriegerät an.

Der Bediener ist somit betreffend dieses Peripheriegerät bzw. alle Peripheriegeräte der Schneidmaschine eine zentrale Funktionskontrolle, d. h. von der Schneidmaschine aus, möglich und es wird ihm hierbei ein Echtzeitbild des jeweiligen Peripheriegerätes zur Verfügung gestellt.

Die Erfindung ist nicht darauf beschränkt, dass nur Peripheriegeräte die mittels Kamera überwachten Funktionsbereiche aufweisen. Es kann durchaus auch sein, dass zusätzlich die Schneidmaschine mindestens einen Funktionsbereich aufweist, der durch eine Kamera überwacht ist. Der bzw. die überwachten Funktionsbereiche befinden sich insbesondere dort, wo der Bediener die Schneidmaschine nicht exakt einsehen kann. Der jeweilige überwachte Funktionsbereich der Schneidmaschine ist gleichfalls mittels Echtzeitbild auf dem Display der Schneidmaschine darstellbar, und es sind die Funktionen der Schneidmaschine über deren Bedienfeld ansteuerbar.

Bei der Schneidmaschine handelt es sich insbesondere um eine Planschneidmaschine, mit einem Tisch zur Aufnahme des Guts, sowie einem oberhalb des Tischs angeordneten Portalrahmen. Der Portalrahmen nimmt vorzugsweise das Display und das Bedienfeld auf.

Gemäß einer bevorzugten Weiterbildung ist vorgesehen, dass das Display der Schneidmaschine als Touchscreen ausgebildet ist und das Bedienfeld in den Touchscreen integriert ist. Grundsätzlich könnte die Schneidmaschine ohne jegliche Tastatur auskommen. In diesem Fall würden über den Touchscreen alle Funktionen von Schneidmaschine und Peripheriegeräten angezeigt, auch das oder die Echtzeitbilder, und es könnten über den Touchscreen die Schneidmaschine und die Peripheriegeräte bedient werden.

In der Praxis wird es üblicherweise so sein, dass das jeweilige Peripheriegerät unmittelbar an diesem angeordnete Bedientasten aufweist. Mittels dieser Bedientasten lässt sich dieses Peripheriegerät insbesondere Einschalten, Ausschalten, ferner lassen sich Grundfunktionen des Peripheriegeräts betätigen.-Aufgrund der erfindungsgemäßen Gestaltung der Anlage, gemäß der die Peripheriegeräte über das Bedienfeld der Schneidmaschine ansteuerbar sind, ergeben sich weitreichende Vorteile gegenüber der beschriebenen Bedienung der Peripheriegeräte. So besteht die Möglichkeit, da die Peripheriegeräte über das Bedienfeld der Schneidmaschine ansteuerbar sind, nicht nur diese Grundfunktionen des jeweiligen Peripheriegerätes über das Bedienfeld der Schneidmaschine, insbesondere dessen Touchscreen anzusteuern, sondern darüber hinaus Einzelfunktionen des Peripheriegerätes, Fehlerfunktionen und/oder Diagnosefunktionen anzusteuern. Die Ansteuerung von Einzelfunktionen des jeweiligen Peripheriegerätes ist dann möglich, wenn es Komponenten aufweist, die mittels mindestens eines elektrischen und/oder pneumatischen Antriebs antreibbar sind. In diesem Fall kann beispielsweise ein konkreter Antrieb des Peripheriegerätes über das Bedienfeld der Schneidmaschine angesteuert werden. Die Ansteuerung des jeweiligen Peripheriegerätes über das Bedienfeld der Schneidmaschine ermöglicht es aufgrund der Darstellung des Echtzeitbildes dieses Peripheriegerätes Fehler zu erkennen, ggf. auch ohne Information dieses Echtzeitbildes aufgrund Datenübertragung von Peripheriegerät zur Schneidmaschine. Auf diese Weise lässt sich auch eine Diagnosefunktion bezüglich des Peripheriegerätes auf dem Display der Schneidmaschine verwirklichen. Insofern ist es von großem Vorteil, dass über das Bedienfeld der Schneidmaschine einzelne Komponenten des jeweiligen Peripheriegerätes einzeln ansteuerbar sind.

Bei dem jeweiligen Peripheriegerät handelt es sich beispielsweise um einen Stapellift, eine Stapelwendevorrichtung, eine Rüttelvorrichtung zum kantengenauen Ausrichten von Stapeln, eine Fördervorrichtung für Stapel, insbesondere unter dem Aspekt des Be- und Entladens eines Peripheriegerätes bzw. der Schneidmaschine, ferner eine Puffereinrichtung für Stapel, eine Entstapelvorrichtung, eine Rückstapelvorrichtung, eine Banderoliervorrichtung für beim Schneiden erzeugte Teilstapel oder eine Stanzvorrichtung für beim Schneiden erzeugte Teilstapel. Bei dem jeweiligen Peripheriegerät kann es sich ferner um Handlingsgeräte, wie Drehteller, Drehgreifer, Robotersysteme und Ladesysteme handeln, die insbesondere im Bereich der Schneidmaschine angeordnet sind oder es weist die Schneidemaschine solche Handlingsgeräte und/oder Ladesysteme auf.

Gemäß einer besonders vorteilhaften Ausbildung der erfindungsgemäßen Anlage ist vorgesehen, dass Funktionen, bei denen es sich insbesondere um Bedienfunktionen, Fehlerfunktionen, Diagnosefunktionen des jeweiligen Peripheriegeräts und/oder Fortschrittsmeldungen der beteiligten Systeme handelt, unmittelbar auf dem als Touchscreen ausgebildeten Display der Schneidmaschine darstellbar sind. Von besonderem Vorteil ist es, wenn die Funktionen des jeweiligen Peripheriegeräts zeitgleich mit dem Echtzeitbild dieses Peripheriegeräts auf dem Touchscreen dargestellt werden.

Es können, je nachdem welche Informationen für den Bediener vorrangig sind, entweder gleichzeitig nur ein Echtzeitbild eines Peripheriegerätes und das Bedienfeld dieses Peripheriegerätes mit dessen Funktionen auf dem Touchscreen dargestellt werden, oder aber gleichzeitig die Echtzeitbilder mehrerer Peripheriegeräte und deren Bedienfelder mit Funktionen auf dem Touchscreen dargestellt werden.

Um nicht nur die Peripheriegeräte optimal überwachen und betätigen zu können, sondern dies auch für die Schneidmaschine der Fall sein soll, ist vorgesehen, dass die Schneidmaschine, insbesondere auf deren der Bedienerseite abgewandten Seite, mindestens einen mittels Kamera überwachten Funktionsbereich aufweist, wobei der jeweils überwachte Funktionsbereich der Schneidmaschine mittels Echtzeitbild auf dem Display der Schneidmaschine darstellbar ist.

Bei dem von der Kamera überwachten Funktionsbereich des jeweiligen Peripheriegeräts ist insbesondere vorgesehen, dass dieser Funktionsbereich ein Tischbereich dieses Peripheriegeräts ist, wobei dieses Tischteil der Aufnahme des blattförmigen, gestapelten Guts dient.

Bei der Schneidmaschine ist der von der Kamera überwachte Funktionsbereich insbesondere ein Tischteil der Schneidmaschine, das sich auf der Seite des Tisches befindet, die der Bedienerseite abgewandt ist, insbesondere sich hinter dem Portalrahmen befindet. Diese Kamera überwacht vorzugsweise die Anlage des zu schneidenden Blattgutstapels an einem Vorschubsattel der Schneidmaschine oder an einem Seitenlineal der Schneidmaschine.

Gemäß einer bevorzugten Weiterbildung der erfindungsgemäßen Anlage ist vorgesehen, dass zwischen der Schneidmaschine und einem oder mehreren Peripheriegeräten und/oder zwischen einem oder mehreren Peripheriegeräten und der Schneidmaschine Steuerinformationen austauschbar sind. Durch diesen Informationsaustausch können sich die beteiligten Systeme automatisch auf die jeweiligen Arbeitsprozesse einstellen, ohne dass jedes einzelne Gerät bzw. die Schneidmaschine vor Ort vorher eingestellt werden muss. Aufwendige Rüstzeiten können dadurch entfallen und die beteiligten Systeme können sich automatisch, sogar während des Produktionsprozesses, an sich ändernde Bedingungen anpassen.

Die Erfindung und deren Weiterbildungen ermöglicht es somit, von einer zentralen Stelle aus, konkret der Schneidmaschine, diese Schneidmaschine und beliebig viele Peripheriegeräte zu bedienen und zu überwachen. Die Überwachung erfolgt mittels der zum jeweiligen Peripheriegerät bzw. zur Schneidmaschine vorgesehenen Kamera. Die Kamera kann durch Betätigen einer Tastatur der Schneidmaschine, insbesondere durch Berühren eines Tastaturbereichs des Touchscreens der Schneidmaschine, angewählt und auf dem Display der Schneidmaschine wiedergegeben werden. Damit ist der Bediener der Schneidmaschine im Bilde, in welchem Prozesszustand sich das Peripheriegerät bzw. die Schneidmaschine befindet. So können Fehler mittels der Kameras detektiert werden. Diese Kamerainformation betreffend das jeweilige Peripheriegerät bzw. die Schneidmaschine kann der Bediener unmittelbar umsetzen in eine Ansteuerung des Peripheriegeräts bzw. der Schneidmaschine, indem er auf dem Display der Schneidmaschine auch die Tastenfunktionalitäten der einzelnen Peripheriegeräte zzgl. weitere Funktionen auf dem Display darstellen kann und somit diese Funktionen bezüglich des jeweiligen Peripheriegerätes bzw. der Schneidmaschine eingeben kann. Somit hat der Bediener eine zentrale Funktionskontrolle für eine beliebige Anzahl von Peripheriegeräten, die er überwachen und bedienen kann. Überdies ist die Anlage hierdurch diagnosefähig.

Weitere Merkmale der Erfindung sind in den Unteransprüchen, der Beschreibung der Figuren und der Figuren selbst dargestellt, wobei bemerkt wird, dass alle Einzelmerkmale und alle Kombinationen von Einzelmerkmalen weitere erfinderische Ausgestaltungen darstellt.

Ein bevorzugtes Ausführungsbeispiel der Erfindung ist in der Zeichnung veranschaulicht und in der nachfolgenden Beschreibung erläutert, ohne hierauf beschränkt zu sein.

Es zeigt in stark vereinfachter Darstellung:
- Fig. 1: eine Ansicht der bei der erfindungsgemäßen Anlage Verwendung findenden Schneidmaschine, von der Bedienerseite aus gesehen,
- Fig. 2: eine Draufsicht der Anlage unter Verwendung der Schneidmaschine gemäß Fig. 1 und diversen Peripheriegeräten.

Die bei der erfindungsgemäßen Anlage 50 Verwendung findende Schneidmaschine 1 ist als Planschneidmaschine ausgebildet. Sie weist ein Grundgestell 2 mit auf diesem gelagerten Tisch 3 sowie in dem Grundgestell 2 gelagertem Portalrahmen 4 auf. Der Tisch dient der Aufnahme von gestapeltem, blattförmigem Gut, das zu schneiden ist bzw. geschnitten ist. Hierbei liegt der quaderförmige Schneidgutstapel, der nicht veranschaulicht ist, mit seiner Unterseite auf der oberen Tischfläche 5 des Tisches 3 auf.

Zwischen dem oberen Rahmenbereich des Portalrahmens und dem Tisch 3 ist eine Öffnung 6 gebildet. Oberhalb dieser Öffnung 6 ist im Portalrahmen 4 ein Schneidmesser 7 und ein Pressbalken 8 verfahrbar angeordnet. Maschinelle Mittel zum Verfahren des Schneidmessers 7 im Schwingschnitt nach unten und zum vertikalen Absenken des Pressbalkens 8 sind nicht veranschaulicht. Der Pressbalken 8 ist unmittelbar neben dem Schneidmesser 7 angeordnet und dient dem Pressen zu schneidenden Gutes zwischen Pressbalken 8 und Tischfläche 5 vor dem Schnitt.

Oberhalb der Öffnung 6 weist der Portalrahmen 4, auf der Bedienerseite, ein als Touchscreen ausgebildetes Display 9 auf. In dieses Display 9 ist das Bedienfeld der Schneidmaschine 1 und auch das Bedienfeld nachstehend noch näher zu beschreibender Peripheriegeräte der Anlage integriert.

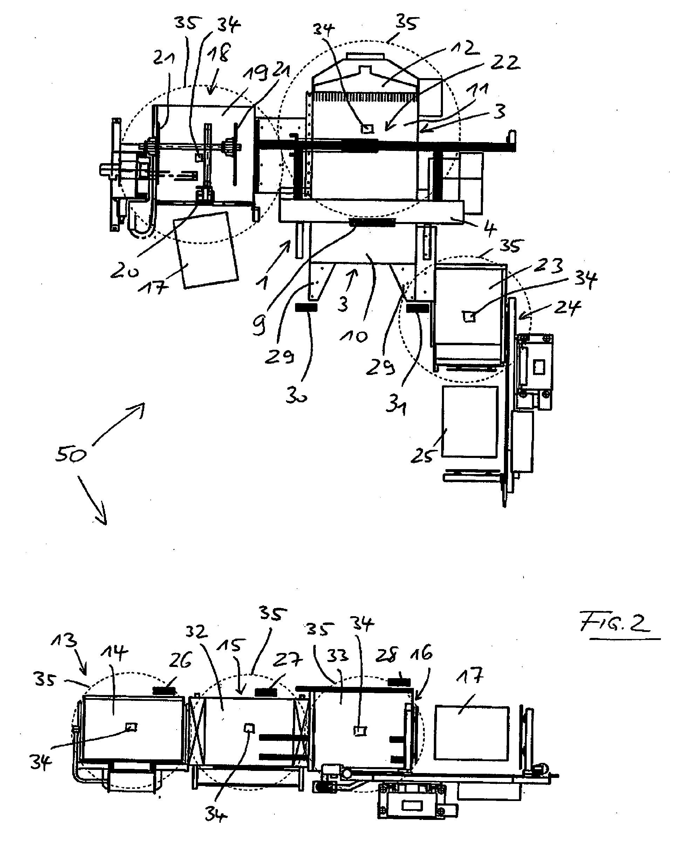

Weitere Einzelheiten der Schneidmaschine 1 ergeben sich aus der Darstellung der Fig. 2. Dieser ist zu entnehmen, dass, bezogen auf die Position des Bedieners, der Tisch 3 ein dem Bediener zugewandtes vorderes Tischteil 10 und ein dem Bediener abgewandtes hinteres Tischteil 11 aufweist. Die Trennung zwischen vorderem Tischteil 10 und hinterem Tischteil 11 bildet die vertikal verlaufende Schneidebene des Schneidmessers 7, so dass nach dem Schnitt geschnittenes Gut auf dem vorderen Tischteil 10 und zu schneidendes Gut auf dem hinteren Tischteil 11 ruht. Dem Vorschieben des zu schneidenden Gutes, das sich auf dem hinteren Tischteil 11 befindet, dient eine Vorschubeinrichtung, die einen Vorschubsattel 12 aufweist.

Nachfolgend sind die einzelnen Geräte - Peripheriegeräte und Schneidmaschine - der in Fig. 2 gezeigten Anlage erläutert:

Ein erstes Peripheriegerät ist ein Stapellift 13. Auf dessen eine Gabel aufweisenden Palettenaufnahmen ruht eine Palette, auf der wiederum ein Stapel 14 zu schneidenden blattförmigen Guts aufliegt. Mittels des Stapellifts 13 lässt sich der Stapel 14 bezüglich seiner oberen Fläche soweit anheben, dass ein oberer Teilstapel des Stapels 14 auf ein zweites Peripheriegerät übergeben werden kann, das im Wesentlichen als Rütteltisch 15 ausgebildet ist. Der Teilstapel wird vorzugsweise manuell auf den Rütteltisch 15 übergeben. Auf der dem Stapel 13 abgewandten Seite ist neben dem Rütteltisch 15 ein weiteres Peripheriegerät angeordnet, das eine Fördereinrichtung 16 zum Übernehmen des gerüttelten gestapelten Guts aufweist. Mittels dieser Fördereinrichtung 16 lässt sich das gerüttelte Gut auf eine Palette 17 abstapeln. - Somit werden mit diesem Teil der zur Fig. 2 beschriebenen Anlage Teilstapel vom Stapel 14 nacheinander abgenommen und im Bereich des Rütteltischs 15 automatisch gerüttelt und von dort automatisch mittels der Fördereinrichtung 16 nacheinander auf der Palette 17 abgelegt.

Der gerüttelte und damit kantengenau ausgerichtete, nunmehr auf der Palette 17 platzierte Gesamtstapel, der dem Stapel 14 entspricht, wird zu dem entfernt angeordneten Bereich der Anlage verfahren, der die Schneidmaschine 1 aufweist. Im Verarbeitungsfluss vor der Schneidmaschine 1 befindet sich ein weiteres Peripheriegerät, das als automatisch wirkende Entstapelvorrichtung 18 ausgebildet ist. Mittels dieser wird ein eventuell zu schneidender Teilstapel von der Palette 17 abgenommen und auf einen Tisch 19 der Entstapelvorrichtung mittels verfahrbaren Greifern 20 überführt und mittels verfahrbaren Linealen 21 auf das hintere Tischteil 11 der Schneidmaschine 1 überführt. Im Bereich dieses hinteren Tischteils 11 weist die Schneidmaschine 1 einen Drehgreifer 22 auf, mittels dessen der zu schneidende Teilstapel parallel zur Schneidebene bewegt und nach Drehung um 90° senkrecht zur Schneidebene in Richtung der Schneidebene unter das Schneidmesser 7 bewegt werden kann.

Nach dem Schnitt, wobei gegebenenfalls, je nach vorgegebenem Schnittmuster, Längs- und Querschnitte zu erzeugen sind, befindet sich der erzeugte Nutzenstapel bzw. die erzeugte Anordnung von Nutzenstapeln auf dem vorderen Tischteil 10, im Handhabungsbereich des Bedieners. Dieser schiebt dann den bzw. die Nutzenstapel auf einen benachbarten Tisch 23 der Bestandteil eines weiteren Peripheriegerätes bildet, das eine Rückstapelvorrichtung bildet. Sind eine Vielzahl von Nutzenstapel nebeneinander und hintereinander in quaderförmiger Anordnung auf den Tisch 23 gesammelt, erfolgt ein automatisches Rückstapeln mittels dieser Rückstapelvorrichtung 24 auf einer brettförmigen Unterlage, die auf einer weiteren Palette 25 ruht.

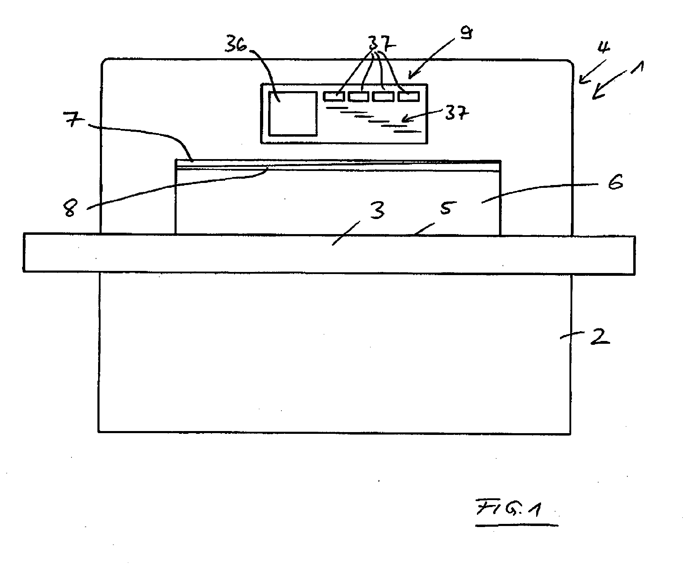

Mit schwarzen rechteckigen Kästchen sind die üblichen Bedienbereiche der einzelnen Peripheriegeräte bzw. der Schneidmaschine in Fig. 2 veranschaulicht, über die die übliche manuelle Bedienung von nicht näher veranschaulichten Bedientasten dieser Peripheriegeräte bzw. der Schneidmaschine erfolgt. Die Anordnung der Bedientasten des Stapellifts 13 ist durch den Kasten 26 veranschaulicht, die Anordnung der Bedientasten des Rütteltisches 15 durch den Kasten 27 veranschaulicht, die Anordnung der Bedientasten der Fördereinrichtung 16 durch den Kasten 28 veranschaulicht. Die Bedienung der Schneidmaschine 1 erfolgt nicht durch Bedientasten, sondern durch den zur Fig. 1 veranschaulichten Display, der als Touchscreen 9 ausgebildet ist.

Neben dem Standort des Bedieners, der in geringem Abstand vor dem vorderen Tischteil 10 ist, befinden sich in seitlichen Vorsprüngen 29 des vorderen Tischteils 10 die Bedientasten für die Entstapelvorrichtung 18 und die Rückstapelfunktion 24. Konkret veranschaulicht das linke Kästchen 30 die Bedientasten für die längs der Schneidmaschine 1 angeordneten Stapelvorrichtung 18 und das rechte Kästchen 31 die rechts der Schneidmaschine 1 angeordneten Bedientasten der Rückstapelvorrichtung 24.

Oberhalb des Stapellifts 13, oberhalb eines Tischteils 32 des Rütteltischs 15, oberhalb eines Tischteils 33 der Fördereinrichtung 16, oberhalb des Tisches 19 der Entstapelvorrichtung 18, oberhalb des hinteren Tischteils 11 der Schneidmaschine 1 und oberhalb des Tisches 23 der Rückstapelvorrichtung 24, jeweils vorzugsweise in einem Gestell des jeweiligen genannten Peripheriegeräts gelagert, ist eine Kamera 34, deren Objektiv nach unten gerichtet ist und die jeweils die Kreisfläche erfasst, die zum jeweiligen Peripheriegerät durch die strichlierte Kreislinie 35 begrenzt ist. Mit der jeweiligen Kamera 34 lässt sich somit ein wesentlicher Bereich des der jeweiligen Kamera 34 zugeordneten Peripheriegerätes überwachen, der für die Verarbeitung des Guts im Bereich der Anlage von Bedeutung ist. Die Bereiche der jeweiligen Peripheriegeräte, die mittels der Kameras 34 überwacht werden können, stellen Funktionsbereiche der Peripheriegeräte dar. Mittels der Kameras 34 lassen sich Echtzeitbilder der jeweiligen Kamera auf dem Touchscreen 9 der Schneidmaschine 1 darstellen. Beispielsweise veranschaulicht Fig. 1, dass auf dem Touchscreen 9 der Schneidmaschine durch Berühren eines definierten Bereiches des Touchscreen durch den Bediener, die vernetzte Steuerung von Schneidmaschine 1 und Peripheriegeräten so angesteuert worden ist, dass das Echtzeitbild zur Fördereinrichtung 16 auf dem Display 9 erscheint. Der Bediener kann unmittelbar, ohne dass er seine Arbeiten an der Schneidmaschine 1 unterbrechen muss, erkennen, ob mit dieser Fördereinrichtung 16 aktuell ein Schneidgutstapel transportiert wird oder ob diese Fördereinrichtung 16 fehlerhaft arbeitet. Er könnte durch Betätigen des Touchscreen 9 oder gegebenenfalls neben dem Echtzeitbild 36 auf dem Display 9 zusätzlich ein weiteres Echtzeitbild einblenden, insbesondere betreffend die Kamera 34 des Stapellifts 13, um festzustellen, ob auf diesem Stapellift 13 sich überhaupt noch ein Stapel befindet oder dieser Stapellift 13 mit neuem Schneidgut versorgt werden muss bzw. ob es ausreicht, den Stapellift 13 erst später in Betrieb zu setzen. Der Bediener kann über das Bedienfeld 37, veranschaulicht im Touchscreen 9 über in Art von Tasten wiedergegebene Bedienbereiche 37 oder eine grundsätzliche Touchscreenanordnung die einzelnen, mehrere oder alle Kameras 34 aktivieren und deren Echtzeitbild auf dem Display 9 darstellen und überdies über das Bedienteil 37, somit von der Schneidmaschine 1 aus, unabhängig von den Bedientasten 26 bis 28, 30, 31 die Peripheriegeräte bedienen.

Aufgrund des Displays bzw. Touchscreens 9 ist nicht nur eine Bedienung von Schneidmaschine 1 und Peripheriegeräten möglich, somit eine Bedienfunktion darstellbar, sondern durchaus auch eine Fehlerfunktion und/oder Diagnosefunktion dieser Anlagenbereiche darstellbar.

## Patentansprüche

1. Anlage (50) zum Verarbeiten von gestapeltem, blattförmigem Gut, mit einer Schneidmaschine (1) zum Schneiden des Guts und mindestens einem Peripheriegerät (13, 15, 16, 18, 24) im Verarbeitungsfluss der Schneidmaschine (1), wobei die Schneidmaschine (1) auf einer Bedienerseite ein Display (9) und ein Bedienfeld (37) aufweist, **dadurch gekennzeichnet, dass** das mindestens eine Peripheriegerät (13, 15, 16, 18, 24) einen mittels einer Kamera (34) überwachten Funktionsbereich (35) aufweist, wobei der Funktionsbereich (35) mittels Echtzeitbild (36) auf dem Display (9) der Schneidmaschine (1) darstellbar ist, sowie das mindestens eine Peripheriegerät (13, 15, 16, 18, 24) über das Bedienfeld (37) ansteuerbar ist.

2. Anlage nach Anspruch 1, **dadurch gekennzeichnet, dass** im Verarbeitungsfluss vor und/oder nach der Schneidmaschine (1) mehrere Peripheriegeräte (13, 15, 16, 18, 24) angeordnet sind, wobei Peripheriegeräte (13, 15, 16, 18, 24) mittels Kameras (34) überwachte Funktionsbereiche (35) aufweisen, wobei der jeweilige Funktionsbereich (35) mittels Echtzeitbild (36) auf dem Display (9) der Schneidmaschine (1) darstellbar ist, sowie die Peripheriegeräte (13, 15, 16, 18, 24) über das Bedienfeld (37) ansteuerbar sind.

3. Anlage nach Anspruch 1 oder 2, **dadurch gekennzeichnet, dass** die Schneidmaschine (1) eine Planschneidmaschine mit einem Tisch (3) zur Aufnahme des Guts sowie einem oberhalb des Tischs (3) angeordneten Portalrahmen (4) ist, wobei der Portalrahmen (4) das Display (9) und das Bedienfeld (37) aufnimmt.

4. Anlage nach einem der Ansprüche 1 bis 3, **dadurch gekennzeichnet, dass** das Display (9) als Touchscreen ausgebildet ist und das Bedienfeld (37) in den Touchscreen (9) integriert ist.

5. Anlage nach einem der Ansprüche 1 bis 4, **dadurch gekennzeichnet, dass** das jeweilige Peripheriegerät (13, 15, 16, 18, 24) Komponenten (25, 21) aufweist, die mittels mindestens eines elektrischen und/oder pneumatischen Antriebs antreibbar sind.

6. Anlage nach einem der Ansprüche 1 bis 5, **dadurch gekennzeichnet, dass** das jeweilige Peripheriegerät ein Stapellift (13), eine Stapelwendevorrichtung, eine Rüttelvorrichtung (15) zum kantengenauen Ausrichten von Stapeln, eine Fördervorrichtung (16) für Stapel, eine Puffereinrichtung für Stapel, eine Entstapelvorrichtung (18), eine Rückstapelvorrichtung (24), eine Banderoliervorrichtung für beim Schneiden erzeugte Teilstapel, eine Stanzvorrichtung für beim Scheiden erzeugte Teilstapel, ein Handlingssystem oder ein Entladesystem ist

7. Anlage nach einem der Ansprüche 4 bis 6, **dadurch gekennzeichnet, dass** Funktionen des jeweiligen Peripheriegeräts (13, 15, 16, 18, 24) unmittelbar auf dem Touchscreen-Display (9) der Schneidmaschine (1) darstellbar sind.

8. Anlage nach Anspruch 7, **dadurch gekennzeichnet, dass** die Funktionen des jeweiligen Peripheriegeräts (13, 15, 16, 18, 24) Bedienfunktionen, Fehlerfunktionen, Diagnosefunktionen und/oder Fortschrittsmeldungen der beteiligten Systeme sind.

9. Anlage nach Anspruch 7 oder 8, **dadurch gekennzeichnet, dass** die Funktionen des jeweiligen Peripheriegerätes (13, 15, 16, 18, 24) zeitgleich mit dem Echtzeitbild (36) der Kamera (34) dieses Peripheriegeräts (13, 15, 16, 18, 24) auf dem Touchscreen-Display (9) dargestellt werden.

10. Anlage nach einem der Ansprüche 7 bis 9, **dadurch gekennzeichnet, dass** gleichzeitig nur ein Echtzeitbild (36) eines Peripheriegeräts und das Bedienfeld (37) dieses Peripheriegeräts mit dessen Funktionen auf dem Touchscreen-Display (9) dargestellt werden oder gleichzeitig die Echtzeitbilder mehrerer Peripheriegeräte um deren Bedienfelder mit Funktionen auf dem Touchscreen-Display (9) dargestellt werden.

11. Anlage nach einem der Ansprüche 1 bis 10, **dadurch gekennzeichnet, dass** das jeweilige Peripheriegerät (13, 15, 16, 18, 24) unmittelbar an diesem oder benachbart zu diesem angeordnete Bedientasten (26, 27, 28, 30, 31) aufweist, wobei das Bedienfeld (37) dieses Peripheriegerät auf dem Touchscreen-Display (9) der Schneidmaschine (1) darstellbar ist und dieses Peripheriegerät über das Touchscreen-Display (9) ansteuerbar ist.

12. Anlage nach einem der Ansprüche 1 bis 11, **dadurch gekennzeichnet, dass** über das Bedienfeld (37) der Schneidmaschine (1) einzelne Komponenten (20, 21) des jeweiligen Peripheriegeräts einzeln ansteuerbar sind.

13. Anlage nach einem der Ansprüche 1 bis 12, **dadurch gekennzeichnet, dass** die Schneidmaschine (1), insbesondere auf deren der Bedienerseite abgewandten Seite, mindestens einen mittels Kamera (34) überwachten Funktionsbereich aufweist, wobei der jeweils überwachte Funktionsbereich der Schneidmaschine (1) mittels Echtzeitbild (36) auf dem Display (9) der Schneidmaschine (1) darstellbar ist.

14. Anlage nach einem der Ansprüche 1 bis 13, **dadurch gekennzeichnet, dass** der von der Kamera (34) überwachte Funktionsbereich des jeweiligen Peripheriegeräts (15, 16, 18, 24) ein Tischbereich (32, 33, 19, 23) dieses Peripheriegeräts ist, wobei das Tischteil der Aufnahme des Guts dient.

15. Anlage nach einem der Ansprüche 1 bis 14, **dadurch gekennzeichnet, dass** bei der Schneidmaschine (1) der von der Kamera (34) überwachte Funktionsbereich ein Tischteil (11) der Schneidmaschine (1) ist, das sich auf der Seite des Tisches (3) befindet, die der Bedienerseite abgewandt ist, insbesondere sich hinter dem Portalrahmen (4) befindet.

16. Anlage nach einem der Ansprüche 1 bis 15, **dadurch gekennzeichnet, dass** zwischen der Schneidmaschine (1) und einem oder mehreren Peripheriegeräten (15, 16, 18, 24) und/oder zwischen einem oder mehreren Peripheriegeräten (15, 16, 18, 24) und der Schneidmaschine (1) Steuerinformationen austauschbar sind.

## Claims

1. Installation (50) for processing stacked, sheet-like material, having a cutting machine (1) for cutting the material and having at least one peripheral device (13, 15, 16, 18, 24) along the processing line of the cutting machine (1), wherein the cutting machine (1), on an operator side, has a display (9) and an operating panel (37), **characterized in that** the at least one peripheral device (13, 15, 16, 18, 24) has a function region (35) monitored by means of a camera (34), wherein the function region (35) can be presented on the display (9) of the cutting machine (1) by means of a real-time image (36), and the at least one peripheral device (13, 15, 16, 18, 24) can be activated via the operating panel (37).

2. Installation according to Claim 1, **characterized in that** a plurality of peripheral devices (13, 15, 16, 18, 24) are arranged upstream and/or downstream of the cutting machine (1), as seen in the direction of the processing line, wherein peripheral devices (13, 15, 16, 18, 24) have function regions (35) monitored by means of cameras (34), wherein the respective function region (35) can be presented on the display (9) of the cutting machine (1) by means of a real-time image (36), and the peripheral devices (13, 15, 16, 18, 24) can be activated via the operating panel (37).

3. Installation according to Claim 1 or 2, **characterized in that** the cutting machine (1) is a guillotine cutter having a table (3) for accommodating the material and having a portal frame (4) arranged above the table (3), wherein the portal frame (4) accommodates the display (9) and the operating panel (37).

4. Installation according to one of Claims 1 to 3, **characterized in that** the display (9) is designed in the form of a touch screen and the operating panel (37) is integrated in the touch screen (9).

5. Installation according to one of Claims 1 to 4, **characterized in that** the respective peripheral device (13, 15, 16, 18, 24) has components (25, 21) which can be driven by means of at least one electric and/or pneumatic drive.

6. Installation according to one of Claims 1 to 5, **characterized in that** the respective peripheral device is a stack lift (13), a stack-turning apparatus, a vibration apparatus (15) for accurately aligning the edges of stacks, a conveying apparatus (16) for stacks, a buffer-storage means for stacks, a destacking apparatus (18), a restacking apparatus (24), a banding apparatus for sub-stacks generated during cutting, a punching apparatus for sub-stacks generated during cutting, a handling system or an unloading system.

7. Installation according to one of Claims 4 to 6, **characterized in that** functions of the respective peripheral device (13, 15, 16, 18, 24) can be presented directly on the touch-screen display (9) of the cutting machine (1).

8. Installation according to Claim 7, **characterized in that** the functions of the respective peripheral device (13, 15, 16, 18, 24) are operating functions, error functions, diagnosis functions and/or progress reports for the systems involved.

9. Installation according to Claim 7 or 8, **characterized in that** the functions of the respective peripheral device (13, 15, 16, 18, 24) are presented on the touch-screen display (9) at the same time as the real-time image (36) from the camera (34) of said peripheral device (13, 15, 16, 18, 24).

10. Installation according to one of Claims 7 to 9, **characterized in that** only a real-time image (36) of a peripheral device and the operating panel (37) of said peripheral device, with the functions thereof, are presented at the same time on the touch-screen display (9) or the real-time images of a plurality of peripheral devices around the operating panels thereof, with functions, are presented at the same time on the touch-screen display (9).

11. Installation according to one of Claims 1 to 10, **characterized in that** the respective peripheral device (13, 15, 16, 18, 24) has operating buttons (26, 27, 28, 30, 31) arranged directly on it or adjacent to it, wherein the operating panel (37) of said peripheral device can be presented on the touch-screen display (9) of the cutting machine (1) and said peripheral device can be activated via the touch-screen display (9).

12. Installation according to one of Claims 1 to 11, **characterized in that** individual components (20, 21) of the respective peripheral device can be activated individually via the operating panel (37) of the cutting machine (1).

13. Installation according to one of Claims 1 to 12, **characterized in that** the cutting machine (1), in particular on the side thereof which is directed away from the operator side, has at least one function region monitored by means of a camera (34), wherein the respectively monitored function region of the cutting machine (1) can be presented on the display (9) of the cutting machine (1) by means of a real-time image (36).

14. Installation according to one of Claims 1 to 13, **characterized in that** the function region of the respective peripheral device (15, 16, 18, 24), said function region being monitored by the camera (34), is a table region (32, 33, 19, 23) of said peripheral device, wherein the table part serves for accommodating the material.

15. Installation according to one of Claims 1 to 14, **characterized in that**, in the case of the cutting machine (1), the function region, which is monitored by the camera (34), is a table part (11) of the cutting machine (1), said table part being located on that side of the table (3) which is directed away from the operator side, in particular is located downstream of the portal frame (4).

16. Installation according to one of Claims 1 to 15, **characterized in that** control information can be exchanged between the cutting machine (1) and one or more peripheral devices (15, 16, 18, 24) and/or between one or more peripheral devices (15, 16, 18, 24) and the cutting machine (1).

## Revendications

1. Installation (50) de traitement de produits en forme de feuilles empilées, l'installation présentant une machine de coupe (1) qui découpe le produit et au moins un appareil périphérique (13, 15, 16, 18, 24) disposé dans le flux de traitement de la machine de coupe (1), la machine de coupe (1) présentant sur un côté utilisateur un affichage (9) et un panneau de commande (37), **caractérisée en ce que** le ou les appareils périphériques (13, 15, 16, 18, 24) présentent une partie fonctionnelle (35) surveillée au moyen d'une caméra (34), **en ce que** la partie fonctionnelle (35) peut être représentée par une image (36) en temps réel sur l'affichage (9) de la machine de coupe (1) et **en ce que** le ou les appareils périphériques (13, 15, 16, 18, 24) peuvent être commandés par l'intermédiaire du panneau de commande (37).

2. Installation selon la revendication 1, **caractérisée en ce que** plusieurs appareils périphériques (13, 15, 16, 18, 24) sont disposés dans le flux de traitement en amont et/ou en aval de la machine de coupe (1), **en ce que** les appareils périphériques (13, 15, 16, 18, 24) présentent des parties fonctionnelles (35) surveillées au moyen de caméras (34) **en ce que** chaque partie fonctionnelle (35) peut être représentée par une image (36) en temps réel sur l'affichage (9) de la machine de coupe (1) et **en ce que** les appareils périphériques (13, 15, 16, 18, 24) peuvent être commandés par l'intermédiaire du panneau de commande (37).

3. Installation selon les revendications 1 ou 2, **caractérisée en ce que** la machine de coupe (1) est une machine de coupe plane dotée d'une table (3) de reprise du produit ainsi qu'un bâti de portail (4) disposé au-dessus de la table (3), le bâti de portail (4) reprenant l'affichage (9) et le panneau de commande (37).

4. Installation selon l'une des revendications 1 à 3, **caractérisée en ce que** l'affichage (9) est configuré comme écran tactile et **en ce que** le panneau de commande (37) est intégré dans l'écran tactile (9).

5. Installation selon l'une des revendications 1 à 4, **caractérisée en ce que** chaque appareil périphérique (13, 15, 16, 18, 24) présente des composants (25, 21) au moyen d'au moins un entraînement électrique et/ou pneumatique.

6. Installation selon l'une des revendications 1 à 5, **caractérisée en ce que** chaque appareil périphérique est un ascenseur (13) à pile, un dispositif de retournement de pile, un ensemble de secouage (15) qui aligne les piles précisément sur leur bord, un ensemble (16) de transport de piles, un dispositif de tampon pour les piles, un ensemble (18) de désempilement, un ensemble (24) de réempilement, un ensemble de bande de roulage pour les piles partielles formées lors de la découpe, un ensemble d'estampage des piles partielles formées lors de la coupe, un système de manutention ou un système de déchargement.

7. Installation selon l'une des revendications 4 à 6, **caractérisée en ce que** les fonctions des différents appareils périphériques (13, 15, 16, 18, 24) peuvent être représentées directement sur l'affichage (9) de l'écran tactile de la machine de coupe (1).

8. Installation selon la revendication 7, **caractérisée en ce que** les fonctions des différents appareils périphériques (13, 15, 16, 18, 24) sont des fonctions de commande, des fonctions d'erreur, des fonctions de diagnostic et/ou des messages d'avancement des systèmes concernés.

9. Installation selon les revendications 7 ou 8, **caractérisée en ce que** les fonctions des différents appareils périphériques (13, 15, 16, 18, 24) sont représentées en même temps que l'image (36) en temps réel de la caméra (34) de cet appareil périphérique (13, 15, 16, 18, 24) sur l'affichage (9) à écran tactile.

10. Installation selon l'une des revendications 7 à 9, **caractérisée en ce que**, seule une image (36) en temps réel de l'appareil périphérique et le panneau de commande (37) de cet appareil périphérique sont représentés simultanément avec ses fonctions sur l'affichage (9) à écran tactile ou **en ce que** les images en temps réel de plusieurs appareils périphériques et de leur panneau de commande sont représentés simultanément avec leurs fonctions sur l'affichage (9) à écran tactile.

11. Installation selon l'une des revendications 1 à 10, **caractérisée en ce que** chaque appareil périphérique (13, 15, 16, 18, 24) présente des touches de commande (26, 27, 28, 30, 31) disposées directement sur l'appareil ou au voisinage de ce dernier, le panneau de commande (37) de cet appareil périphérique pouvant être représenté sur l'affichage (9) à écran tactile de la machine de coupe (1) et cet appareil périphérique pouvant être commandé par l'intermédiaire de l'affichage (9) à écran tactile.

12. Installation selon l'une des revendications 1 à 11, **caractérisée en ce que** différents composants (20, 21) de chaque appareil périphérique peuvent être commandés séparément par l'intermédiaire du panneau de commande (37) de la machine de coupe (1).

13. Installation selon l'une des revendications 1 à 12, **caractérisée en ce que** la machine de coupe (1) présente, en particulier sur son côté non tourné vers l'opérateur, au moins une plage fonctionnelle surveillée au moyen d'une caméra (34), la plage fonctionnelle particulière surveillée de la machine de coupe (1) pouvant être représentée par une image (36) en temps réel sur l'affichage (9) de la machine de coupe (1).

14. Installation selon l'une des revendications 1 à 13, **caractérisée en ce que** la partie fonctionnelle de chaque appareil périphérique (15, 16, 18, 24) surveillée par la caméra (34) est une partie (32, 33, 19, 23) de la table de cet appareil périphérique, la partie de la table servant à reprendre le produit.

15. Installation selon l'une des revendications 1 à 14, **caractérisée en ce que** la partie fonctionnelle surveillée par la caméra (34) de la machine de coupe (1) est une partie de table (11) de la machine de coupe (1) située sur le côté de la table (3) non tourné vers le côté opérateur, et en particulier est située en arrière du bâti de portique (4).

16. Installation selon l'une des revendications 1 à 15, **caractérisée en ce que** des informations de commande peuvent être échangées entre la machine de coupe (1) et un ou plusieurs appareils périphériques (15, 16, 18, 24) et/ou entre un ou plusieurs appareils périphériques (15, 16, 18, 24) et la machine de coupe (1).
